# EUROPÄISCHE PATENTSCHRIFT

(11) **EP 1 774 417 B1**
(45) Veröffentlichungstag und Bekanntmachung des Hinweises auf die Patenterteilung: **07.07.2010**
(21) Anmeldenummer: 05762973.5
(22) Anmeldetag: 20.07.2005
(51) Int. Cl.: G05B 19/042

(54) **VERFAHREN UND VORRICHTUNG ZUM ÜBERWACHEN DES ABLAUFS EINES STEUERPROGRAMMS AUF EINEM RECHENGERÄT**
METHOD AND DEVICE FOR MONITORING THE RUNNING OF A CONTROL PROGRAM ON AN ARITHMETIC PROCESSING UNIT
PROCEDE ET DISPOSITIF POUR SURVEILLER LE DEROULEMENT D'UN PROGRAMME DE COMMANDE DANS UN ORDINATEUR

(30) Priorität: 22.07.2004 DE 102004035456
(43) Veröffentlichungstag der Anmeldung: 18.04.2007
(73) Patentinhaber: ROBERT BOSCH GMBH, 70442 Stuttgart (DE)
(72) Erfinder: MUELLER, Bernd, 70839 Gerlingen (DE); HARTER, Werner, 75428 Illingen (DE); BOEHL, Eberhard, 72768 Reutlingen (DE); KOTTKE, Thomas, 71139 Ehningen (DE); COLLANI, Yorck, 71717 Beilstein (DE); HAEFNER, Thomas, 74523 Schwäbisch Hall (DE)
(86) Internationale Anmeldenummer: PCT/EP2005/053534
(87) Internationale Veröffentlichungsnummer: WO 2006/008313

(56) Entgegenhaltungen:
- DE-A1- 10 205 809
- US-A- 6 044 458
- MAHMOOD A ET AL: "CONCURRENT ERROR DETECTION USING WATCHDOG PROCESSORS - A SURVEY" IEEE TRANSACTIONS ON COMPUTERS, IEEE INC. NEW YORK, US, Bd. 37, Nr. 2, Februar 1988 (1988-02), Seiten 160-174, XP000648398 ISSN: 0018-9340 in der Anmeldung erwähnt
- OSEK/VDX: "OSEK/VDX Time-Triggered Operating System Specification 1.0"[Online] 24. Juli 2001 (2001-07-24), XP002344813 Gefunden im Internet: URL:http://web.archive.org/web/20011128205 507/http://www.osek-vdx.org/> [gefunden am 2005-09-13]
- MIREMADI G ET AL: "Two software techniques for on-line error detection" FAULT-TOLERANT PARALLEL AND DISTRIBUTED SYSTEMS, 1992. DIGEST OF PAPERS., 1992 IEEE WORKSHOP ON AMHERST, MA, USA 6-7 JULY 1992, LOS ALAMITOS, CA, USA,IEEE COMPUT. SOC, US, 6. Juli 1992 (1992-07-06), Seiten 328-335, XP010133132 ISBN: 0-8186-2870-7

## Beschreibung

Die vorliegende Erfindung betrifft ein Verfahren zum Steuern von technischen Vorgängen, insbesondere in einem Kraftfahrzeug. Bei dem Verfahren wird ein Steuerprogramm von einem Rechengerät, insbesondere von einem Mikroprozessor oder einem Zustandsautomaten, abgearbeitet. Im Vorfeld der Abarbeitung wird zumindest über einen zu überwachenden Teil des Programmcodes des Steuerprogramms eine erste Signatur gebildet. Während der Abarbeitung des Steuerprogramms wird über den zu überwachenden Teil des abgearbeiteten Programmcodes eine gleichartige zweite Signatur gebildet und mit der ersten Signatur verglichen.

Die Erfindung betrifft auch eine Vorrichtung zum Überwachen des Ablaufs eines Steuerprogramms auf einem Rechengerät, insbesondere auf einem Mikroprozessor oder einem Zustandsautomaten. Die Vorrichtung umfasst erste Mittel zum Zugreifen auf eine im Vorfeld einer Abarbeitung des Steuerprogramms zumindest über einen zu überwachenden Teil des Programmcodes des Steuerprogramms gebildete erste Signatur, zweite Mittel zum Empfangen zumindest des zu überwachenden Teils des abgearbeiteten Programmcodes des Steuerprogramms, und dritte Mittel zum Bilden einer gleichartigen zweiten Signatur über den empfangenen Programmcode.

Schließlich betrifft die vorliegende Erfindung auch ein Computerprogramm, das auf einem ersten Rechengerät, das insbesondere als ein Mikroprozessor ausgebildet ist, einer Vorrichtung zum Überwachen des Ablaufs eines Steuerprogramms ablauffähig ist, wobei das Steuerprogramm auf einem zweiten Rechengerät, das insbesondere als ein Mikroprozessor oder als ein Zustandsautomat ausgebildet ist, abläuft.

### Stand der Technik

Eine der Hauptaufgaben bei der Entwicklung von Rechnergeräten für sicherheitsrelevante Anwendungen ist der Umgang mit Fehlern in der Elektronik. Eine wesentliche Klasse von zu betrachtenden Fehlern sind Fehler im Ablauf eines auf dem Rechengerät ablauffähigen Steuerprogramms. Dazu wird nach dem Stand der Technik häufig die nachfolgend beschriebene Methode des sogenannten Control Flow Checking (CFC) eingesetzt. Diese Methode ist beispielsweise in dem Artikel Mahmood, A. und McCluskey, E. J.: "Concurrent Error Detection Using Watchdog Processors - A Survey", IEEE Transactions on Computers, Vol. 37, No. 2, Februar 1988, S. 160 - 174 näher beschrieben.

Bei dem bekannten Verfahren wird über Teile des Programmcodes eines Steuerprogramms vor der Abarbeitung des Steuerprogramms, also off-line, eine erste Signatur (z. B. mittels eines Cyclic Redundancy Check, CRC) gebildet und in einem Speicherelement abgelegt. Während der Abarbeitung des Programmcodes des Steuerprogramms wird beim Eintreten in den zu überwachenden Teil des Programmcodes eine gleichartige zweite Signatur gebildet. Die im Betrieb gebildete zweite Signatur läuft über die Teile des Programmcodes, die tatsächlich aufgerufen werden, wohingegen die erste Signatur über die Teile des Programmcodes gebildet wird, die aufgerufen werden sollten. Durch einen Vergleich der beiden Signaturen kann ein Fehler im Programmablauf, wie bspw. das Auslassen einer Task oder das Aufrufen von Tasks in der falschen Reihenfolge, mit einer hohen Wahrscheinlichkeit detektiert werden.

Das bekannte Verfahren lässt sich grundsätzlich nur für solche Codeteile verwenden, bei denen die im Betrieb in die zweite Signatur eingebrachten Codeteile im fehlerfreien Fall identisch sind mit den off-line angenommenen. Das heißt, der in die zweite Signatur eingebrachte Codeteil muss völlig deterministisch sein. Dies limitiert in vielen Anwendungsfällen den Einsatz eines solchen CFC-Verfahrens auf kleinere Code-Abschnitte zwischen zwei Verzweigungen.

In künftigen sicherheitsrelevanten Systemen setzen sich zeitgesteuerte Architekturen mehr und mehr durch. Das heißt, es werden in zunehmendem Maße Steuerprogramme eingesetzt, bei denen die Abarbeitung des Programmcodes zeitlich fest vorhersagbar, also deterministisch, ist. Es ist also abzusehen, dass in Zukunft CFC-Verfahren deutlich an Bedeutung gewinnen werden.

Ein Nachteil des bekannten Verfahrens besteht jedoch darin, dass es lediglich eine Aussage darüber liefert, ob die verschiedenen Programmteile (bspw. Tasks) in der richtigen Reihenfolge abgearbeitet worden sind. Gerade bei heutigen Echtzeitbetriebssystemen und zeitgesteuerten Betriebssystemen ist es jedoch wichtig, dass die Programmteile nicht nur in der richtigen Reihenfolge abgearbeitet werden, sondern dass sie auch zum richtigen Zeitpunkt gestartet werden. Eine Aussage darüber, ob die Programmteile zum richtigen Zeitpunkt gestartet wurden, kann mit dem bekannten CFC-Verfahren nicht gemacht werden.

Der vorliegenden Erfindung liegt deshalb die Aufgabe zugrunde, das aus dem Stand der Technik bekannte Verfahren derart auszugestalten und weiterzubilden, dass es eine Aussage über die Abarbeitung der Programmteile des Steuerprogramms zum richtigen Zeitpunkt liefert.

Zur Lösung dieser Aufgabe wird ausgehend von dem Verfahren der eingangs genannten Art vorgeschlagen, dass in die Bildung der Signaturen Informationen über den Zeitpunkt der Abarbeitung des zu überwachenden Teils des Steuerprogramms einfließen.

### Vorteile der Erfindung

Erfindungsgemäß fließen in die Signaturen Informationen über den Zeitpunkt der Abarbeitung des zu überwachenden Teils des Steuerprogramms oder die Zeitpunkte selbst ein. Die Informationen über den Zeitpunkt der Abarbeitung der Programmteile können bei der Signaturbildung alleine oder aber zusammen mit anderen Informationen, beispielsweise einer Kennung des abgearbeiteten Programmteils, berücksichtigt werden. Damit kann nicht nur die richtige Reihenfolge der Abarbeitung der Programmteile des Steuerprogramms, sondern auch der richtige Zeitpunkt der Abarbeitung der Programmteile überwacht werden. Eine Abarbeitung der Programmteile in der richtigen Reihenfolge, aber zum falschen Zeitpunkt, führt somit zu einer Abweichung der bei der Abarbeitung des Programmcodes des Steuerprogramms gebildeten zweiten Signatur von der off-line gebildeten ersten Signatur. Die Abweichung der Signaturen zueinander wird detektiert und es können entsprechende Maßnahmen getroffen werden. Diese Maßnahmen bestehen bspw. darin, dass das Steuerprogramm in einen Notlaufbetrieb umgeschaltet oder ganz abgeschaltet wird. Alternativ oder zusätzlich kann auch eine entsprechende Angabe über den detektierten Fehler in einen Fehlerspeicher geschrieben und zu einem späteren Zeitpunkt, beispielsweise in einer Werkstatt, ausgelesen werden.

Mit dem erfindungsgemäßen Verfahren kann der komplette deterministische Teil eines Betriebssystems überwacht werden. Je nach Implementierung eines Echtzeitbetriebssystems können mit dem Verfahren Fehler in einem sogenannten Time-Table ROM (Read-Only-Memory) Auslesefehler aus dem Time-Table ROM, Fehler in einem Komparator, Fehler in einer Routine zur Bildung eines sogenannten Compare-Wertes, und Fehler bei einem Taskaufruf erkannt werden. Je nach Ausbaustufe des erfindungsgemäßen Verfahrens kann auch ein fehlerhaftes Beenden einer Task erkannt werden. Besonders vorteilhaft ist es, wenn die Signaturbildung in einer dafür vorgesehenen Hardwareeinheit, die hier als Signaturregister bezeichnet wird, stattfindet.

Gemäß einer vorteilhaften Weiterbildung der vorliegenden Erfindung wird vorgeschlagen, dass in die Bildung der Signaturen der Zeitpunkt selbst der Abarbeitung des zu überwachenden Teils des Steuerprogramms mit einfließt. Alternativ kann in die Bildung der Signaturen eine von dem Zeitpunkt der Abarbeitung des zu überwachenden Teils des Steuerprogramms abhängige Größe mit einfließen. Die Größe kann beispielsweise eine Differenz zwischen verschiedenen Zeitwerten sein. Diese Ausgestaltung der Erfindung ist bei einem freilaufenden Timer vorteilhaft, da dort die off-line bekannten Ablaufeigenschaften nur als zeitliche Differenzen bekannt sind.

Des weiteren wird vorgeschlagen, dass in die Bildung der Signaturen ein codiertes Zeitfenster der Abarbeitung des zu überwachenden Teils des Steuerprogramms einfließt. Dazu wird in das Signaturregister die Nummer des Zeitfensters der zeitgesteuerten Aktivität geschrieben. Die Codierung des Zeitfensters kann mit einer fortlaufenden Zahl oder mit einem geeigneten Code (z.B. Primzahlen) erfolgen. Der Aufruf der zu überwachenden Aktivität ist dann nicht mehr an einen exakten Zeitpunkt gebunden, sondern kann in einem Zeitfenster stattfinden.

Gemäß einer bevorzugten Ausführungsform der vorliegenden Erfindung wird vorgeschlagen, dass als zu überwachender Teil des Steuerprogramms mindestens eine Task des Steuerprogramms überwacht wird.

Vorteilhafterweise fließt als Information über den Zeitpunkt der Abarbeitung des zu überwachenden Teils des Steuerprogramms der Beginn der Abarbeitung des zu überwachenden Teils des Steuerprogramms in die Bildung der Signaturen mit ein. Der Beginn der Abarbeitung kann als absoluter Zeitwert oder als eine Differenz zu einem vorangegangenen Zeitwert vorliegen.

Gemäß einer anderen vorteilhaften Weiterbildung der vorliegenden Erfindung werden die Signaturen nur über zeitgesteuerte Teile des Steuerprogramms gebildet.

Zur Bildung der Signaturen, die auch als Prüfsummen bezeichnet werden können, können beliebige Verfahren eingesetzt werden. Vorteilhafterweise wird zur Bildung der Signaturen ein Cyclic Redundancy Check (CRC) verwendet.

Gemäß einer weiteren bevorzugten Ausführungsform der Erfindung wird vorgeschlagen, dass auf einen Fehler eines Betriebssystems des Rechengeräts geschlossen wird, falls eine Abweichung zwischen der ersten Signatur und der zweiten Signatur festgestellt wird. Vorzugsweise wird auf einen Fehler eines deterministischen Teils des Betriebssystems geschlossen, falls eine Abweichung zwischen der ersten Signatur und der zweiten Signatur festgestellt wird.

Als eine weitere Lösung der Aufgabe der vorliegenden Erfindung wird ausgehend von der Vorrichtung der eingangs genannten Art vorgeschlagen, dass die dritten Mittel der Vorrichtung die zweite Signatur derart bilden, dass in die Bildung der zweiten Signatur Informationen über den Zeitpunkt der Abarbeitung des zu überwachenden Teils des Steuerprogramms einfließen.

Die erfindungsgemäße Vorrichtung ist eine Hardwareeinheit, die auch als Signaturregister bezeichnet werden kann. Die erfindungsgemäße Vorrichtung kann Teil des Rechengerätes sein, auf dem das zu überwachende Steuerprogramm abläuft. Zuverlässigere Überwachungsergebnisse lassen sich jedoch erzielen, wenn die erfindungsgemäße Vorrichtung unabhängig und separat von dem Rechengerät ausgebildet ist, auf dem das Steuerprogramm abläuft. In diesem Fall verfügt die Vorrichtung über ein eigenes Rechengerät, insbesondere einen Mikroprozessor, auf dem ein Computerprogramm abläuft, welches zur Ausführung des erfindungsgemäßen Verfahrens programmiert ist. Wenn das Computerprogramm auf dem Rechengerät der erfindungsgemäßen Vorrichtung abläuft, wird das erfindungsgemäße Verfahren ausgeführt.

Gemäß einer vorteilhaften Weiterbildung der vorliegenden Erfindung wird vorgeschlagen, dass die Vorrichtung vierte Mittel zum Vergleichen der während der Abarbeitung der zu überwachenden Teile des Steuerprogramms berechneten zweiten Signatur mit der im Vorfeld off-line berechneten ersten Signatur aufweist.

Gemäß einer bevorzugten Ausführungsform der Erfindung wird vorgeschlagen, dass die Vorrichtung über ein auf dem Rechengerät, auf dem das zu überwachende Steuerprogramm abläuft, ablaufendes Betriebssystem getriggert ist. Das bedeutet also, dass während der Abarbeitung des Steuerprogramms auf dem Rechengerät die Vorrichtung den Programmablauf nicht kontinuierlich, sondern nur zu bestimmten Zeitpunkten überwacht. Der Schritt der on-line Signaturbildung über den zu überwachenden Teil des Steuerprogramms wird also nicht kontinuierlich, sondern zu vorgegebenen Zeitpunkten ausgeführt. Vorzugsweise ist die Vorrichtung periodisch getriggert, so dass das erfindungsgemäße Verfahren in regelmäßigen zeitlichen Abständen ausgeführt wird.

Von besonderer Bedeutung ist die Realisierung des erfindungsgemäßen Verfahrens in der Form eines Computerprogramms. Dabei ist das Computerprogramm auf einem Rechengerät, insbesondere auf einem Mikroprozessor, einer Vorrichtung zum Überwachen des Ablaufs eines Steuerprogramms ablauffähig und zur Ausführung des erfindungsgemäßen Verfahrens programmiert. Das Steuergerät läuft auf einem zweiten Rechengerät, das ebenfalls insbesondere als ein Mikroprozessor ausgebildet ist. In diesem Fall wird also die Erfindung durch das Computerprogramm realisiert, so dass dieses Computerprogramm in gleicher Weise die Erfindung darstellt, wie das Verfahren, zu dessen Ausführung das Computerprogramm geeignet ist. Das Computerprogramm ist vorzugsweise auf einem Speicherelement abgespeichert, von wo aus es zur Abarbeitung entweder als Ganzes oder abschnittsweise an das Rechengerät übertragen wird. Als Speicherelement kann insbesondere ein elektrisches Speichermedium zur Anwendung kommen, bspw. ein Random-Access-Memory (RAM), ein Read-Only-Memory (ROM) oder ein Flash-Memory.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung. Es zeigen:
- Figur 1: ein Ablaufdiagramm des erfindungsgemäßen Verfahren gemäß einer bevorzugten Ausführungsform;
- Figur 2: eine erfindungsgemäße Vorrichtung gemäß einer bevorzugten Ausführungsform der Erfindung in einer schematischen Ansicht; und
- Figur 3: eine erfindungsgemäße Vorrichtung gemäß einer bevorzugten Ausführungsform der Erfindung in einer anderen schematischen Ansicht.

### Beschreibung der Ausführungsbeispiele

Die Erfindung betrifft ein Verfahren zum Steuern und/oder Regeln von technischen Vorgängen insbesondere in einem Kraftfahrzeug, bei dem ein Steuerprogramm von einem Rechengerät, insbesondere von einem Mikroprozessor, abgearbeitet wird. Das Steuerprogramm umfasst mehrere Tasks. Das Steuerprogramm dient insbesondere zum Steuern und/oder Regeln von sicherheitsrelevanten Systemen, wie beispielsweise einem Antiblockiersystem (ABS), einem Fahrstabilitätsprogramm (ESP), einer Lenkregelung (Steerby-Wire) und/oder Fahrwerkregelung. Auf dem Rechengerät, auf dem dass Steuerprogramm abläuft, kann ein beliebiges Betriebssystem für zeitgesteuerte Systeme ablaufen. Vorzugsweise läuft auf dem Rechengerät ein Betriebssystem nach dem OSEK time Standard.

Bei dem erfindungsgemäßen Verfahren wird der Ablauf des Steuerprogramms auf dem Rechengerät überwacht. Die Überwachung erstreckt sich dabei nicht nur auf die Abarbeitung der Tasks des Steuerprogramms in der richtigen Reihenfolge, sondern auch auf die Abarbeitung der Tasks zum richtigen Zeitpunkt. Auf diese Weise kann der komplette deterministische Teil des Betriebssystems auf eine ordnungsgemäße Funktion hin überwacht werden. Dadurch kann eine hohe Zuverlässigkeit und Funktionssicherheit bei der Steuerung des technischen Vorgangs erzielt werden.

Das erfindungsgemäße Verfahren beruht auf einer Signaturbildung über bestimmte zu überwachende Teile (zum Beispiel Tasks) des Steuerprogramms, zum einen vor der Abarbeitung des Steuerprogramms auf dem Rechengerät und zum anderen während des Ablaufs des Steuerprogramms auf dem Rechengerät. Die beiden Signaturen, oder auch Prüfsummen genannt, werden miteinander verglichen und in Abhängigkeit von dem Ergebnis des Vergleichs auf eine ordnungsgemäße oder fehlerhafte Funktion des Betriebssystems geschlossen. Um eine Abarbeitung der Tasks des Steuerprogramms zum richtigen Zeitpunkt überwachen zu können, wird erfindungsgemäß vorgeschlagen, dass in die Bildung der Signaturen auch Informationen über den Zeitpunkt der Abarbeitung des zu überwachenden Teils des Steuerprogramms mit einfließen.

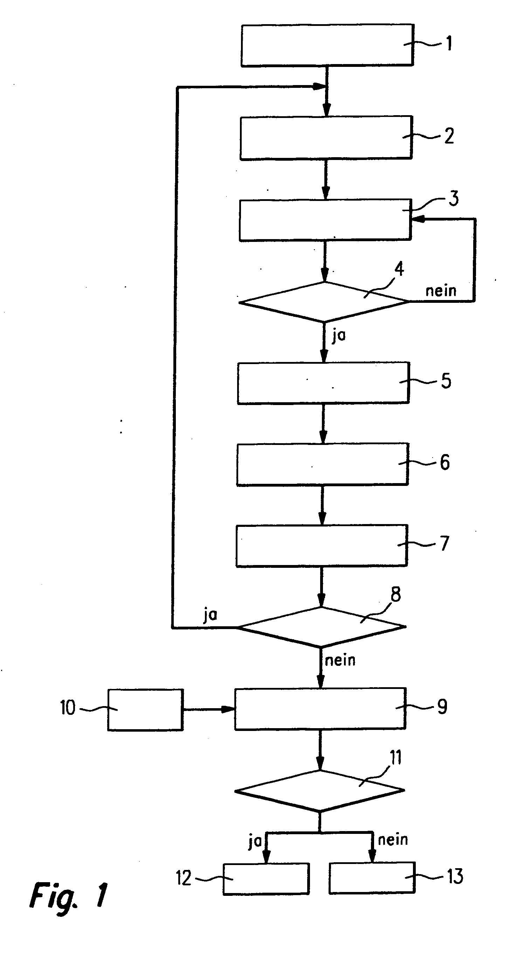

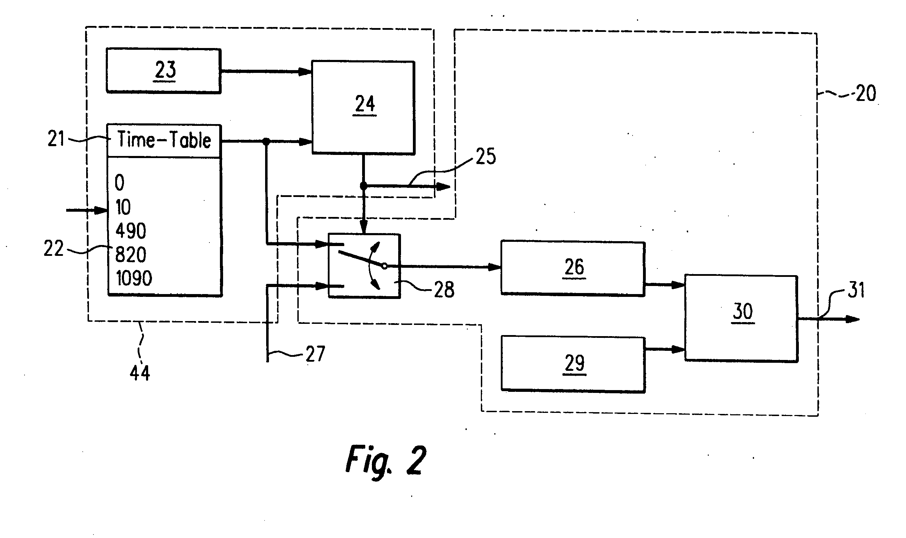

In Figur 1 ist ein Ablaufdiagramm eines erfindungsgemäßen Verfahrens gemäß einer bevorzugten Ausführungsform dargestellt. In einem Funktionsblock 1 wird das erfindungsgemäße Verfahren gestartet. In einem zeitgesteuerten Betriebssystem sind typischerweise die Zeitpunkte für den Beginn der Abarbeitung der Tasks des Steuerprogramms in einer Tabelle, dem sogenannten Time-Table (Bezugszeichen 21 in Figur 2), abgelegt. In dem Time-Table müssen nicht notwendigerweise für alle Tasks Startzeitpunkte (Bezugszeichen 22 in Figur 2) abgelegt sein; es ist durchaus möglich, dass nur für einige der Tasks (nämlich die zeitgesteuerten Tasks) Startzeitpunkte abgelegt sind. In diesem Fall wird dann die Signatur nur über die zeitgesteuerten Tasks, die in dem Time-Table abgelegt sind, gebildet. Die ist typischerweise der Teil des Steuerprogramms, an dessen Überwachung ein besonderes Interesse besteht. In einem Funktionsblock 2 wird ein Wert für den Startzeitpunkt einer Task aus dem Time-Table ausgelesen.

Die Zeitsteuerung eines Betriebssystems ist in der Regel so implementiert, dass der Wert eines Zeitgebers, eines sogenannten Timers (Bezugszeichen 23 in Figur 2), mit vorgebbaren Zeitwerten, zu denen bestimmte Tasks beginnen sollen, verglichen wird (Komparator 24 in Figur 2). Sobald der Timer einen vorgegebenen Zeitwert erreicht, wird ein Signal ausgelöst (zum Beispiel ein Interrupt-Befehl 25 in Figur 2), das die entsprechende zeitgesteuerte Aktivität auslöst. Beispiele für solche zeitgesteuerte Aktivitäten sind der Beginn einer Task, ein sogenanntes Deadline Monitoring oder eine Unterbrechung einer Task. Falls diese zeitgesteuerten Aktivitäten korrekt ausgelöst werden, kann man mit einer überwiegenden Wahrscheinlichkeit davon ausgehen, dass das Betriebssystem korrekt arbeitet. In einem Funktionsblock 3 wird der aktuelle Wert des Timers ausgelesen. In einem Abfrageblock 4 wird überprüft, ob der aus dem Time-Table gelesene Zeitwert für den Start einer neuen Task größer oder gleich dem aktuellen Timerwert ist. Falls der Timerwert den vorgegebenen Zeitwert noch nicht erreicht hat, wird wieder in den Funktionsblock 3 verzweigt und der aktuelle Timerwert von neuem ausgelesen. Diese Schleife, bestehend aus dem Funktionsblock 3 und dem Abfrageblock 4, wird so lange wiederholt, bis der aktuelle Timerwert dem in dem Funktionsblock 2 aus dem Time-Table geholten Zeitwert entspricht oder diesen sogar überschritten hat.

Sobald das der Fall ist, wird in einem Funktionsblock 5 der Zeitwert aus dem Time-Table in ein Signaturregister (Bezugszeichen 26 in Figur 2) geschrieben und die entsprechende Task gestartet. Als zusätzliche Option ist es denkbar, dass nicht nur der Startzeitpunkt der zeitgesteuerten Aktivität in das Statusregister geschrieben wird, sondern auch eine Kennung der Aktivität selbst. Das kann z. B. der erste Befehl oder die erste Adresse der auszuführenden Task sein. Besonders vorteilhaft ist dies dann, wenn der Entwickler des Steuerprogramms beziehungsweise der Entwickler der entsprechenden Task eine bezüglich der Signatur günstige Kennung wählt. So kann beispielsweise jede Task als ersten Befehl das Schreiben einer Primzahl in das Signaturregister haben, wobei keine zwei Primzahlen gleich sind. Durch das Starten der Task in dem Funktionsblock 5 wird also nach Abarbeitung des ersten Befehls der Task eine Primzahl als Kennung der Task in das Statusregister geschrieben. Diese optionale Erweiterung des erfindungsgemäßen Verfahrens ist in Figur 1 mit den Bezugszeichen 6 und 7 bezeichnet. In dem Funktionsblock 6 wird eine Anfangskennung der Task in das Statusregister geschrieben. In dem Funktionsblock 7 wird eine Endkennung der Task in das Statusregister geschrieben. Auf diese Weise kann auf einfache Weise zusätzlich zu der Überwachung, ob die überwachten Programmteile (z. B. Tasks) zum richtigen Zeitpunkt ausgeführt werden, auch die Abarbeitung der Tasks in der richtigen Reihenfolge überwacht werden.

In einem Abfrageblock 8 wird dann überprüft, ob weitere Tasks aufgerufen werden sollen oder nicht. Dies kann beispielsweise anhand des Inhalts des Time-Tables ermittelt werden. Sind in dem Time-Table keine weiteren Startzeiten mehr enthalten, ist davon auszugehen, dass keine weitere Task aufgerufen werden soll. Sind dagegen noch weitere Startzeitpunkte in dem Time-Table enthalten, ist davon auszugehen, dass noch weitere Tasks aufgerufen werden sollen. In diesem Fall verzweigt das erfindungsgemäße Verfahren zu dem Funktionsblock 2, wo der nächste Wert aus dem Time-Table ausgelesen wird. Die Programmschleife bestehend aus den Blöcken 2 bis 8 wird so lange durchlaufen, bis alle Tasks aufgerufen und die Startzeitpunkte aller aufgerufener Tasks in das Signaturregister geschrieben wurden.

Danach wird in einen Funktionsblock 9 verzweigt, wo eine Signatur über die in dem Signaturregister enthaltenen Startzeitpunkte der tatsächlich ausgeführten Tasks gebildet wird. Bereits im Vorfeld der Abarbeitung des in Figur 1 dargestellten Verfahrens wurde off-line eine erste Signatur über die Teile des Steuerprogramms gebildet, die während der Abarbeitung des Steuerprogramms abgearbeitet werden sollen. Die erste Signatur wird in einem Speicherelement (Bezugszeichen 29 in Figur 2) abgelegt. Bei der off-line Signaturbildung fließt auch der vorgesehene Zeitpunkt der Abarbeitung der entsprechenden Tasks mit ein. Die off-line Signaturbildung ist in Figur 1 durch einen Funktionsblock 10 repräsentiert. Die off-line gebildete Signatur steht in dem Funktionsblock 9 zur Verfügung, wo sie mit der zweiten on-line über die tatsächlich abgearbeiteten Teile des Steuerprogramms gebildeten Signatur verglichen wird.

In einem Abfrageblock 11 wird überprüft, ob der Vergleich in Ordnung ist oder nicht. In Ordnung bedeutet in diesem Zusammenhang, dass der Vergleich vorgebbare Anforderungen erfüllt. Diese Anforderungen können bspw. vorgeben, dass die erste Signatur und die zweite Signatur gleich sein müssen. Es ist jedoch auch denkbar, dass die Anforderungen vorgeben, dass die erste Signatur größer oder größer gleich der zweiten Signatur ist. Umgekehrt kann die Anforderung auch vorgeben, dass die erste Signatur kleiner oder kleiner gleich der zweiten Signatur ist. Schließlich kann die Anforderung auch vorgeben, dass eine Signatur oder beide Signaturen innerhalb eines Toleranzfensters mit vorgebbaren Grenzwerten liegen ("untere Grenze" < x < "obere Grenze", mit x = erste Signatur und/oder zweite Signatur). Ob die gegebene Anforderung erfüllt ist, wird in dem Abfrageblock 11 überprüft. Falls der Vergleich in Abfrageblock 11 in Ordnung ist, wird davon ausgegangen, dass das Betriebssystem ordnungsgemäß funktioniert und es wird zu einem Funktionsblock 12 verzweigt und das erfindungsgemäße Verfahren beendet. Falls sich in Abfrageblock 11 jedoch ergibt, dass der Vergleich nicht in Ordnung ist, wird zu einem Funktionsblock 13 verzweigt und eine Fehlermeldung ausgegeben.

Der Start des in Figur 1 dargestellten erfindungsgemäßen Verfahrens kann beispielsweise durch das auf den Rechengerät ablaufende Betriebssystem getriggert, vorzugsweise periodisch getriggert, erfolgen.

In Figur 2 ist eine erfindungsgemäße Vorrichtung zur Realisierung des erfindungsgemäßen Verfahrens dargestellt.
Die Vorrichtung ist in ihrer Gesamtheit mit dem Bezugszeichen 20 bezeichnet. Sie dient zum Überwachen des Ablaufs eines Steuerprogramms auf einem Rechengerät, insbesondere auf einem Mikroprozessor 40. Der Time-Table, in dem die Startzeitpunkte 22 für die auszuführenden Tasks abgelegt sind, ist mit dem Bezugszeichen 21 bezeichnet. Statt der in dem Time-Table 21 abgelegten absoluten Zeitwerte für die Startzeitpunkte 22 können dort auch relative Zeitwerte, das sind zeitliche Differenzen zu einem vorangegangenen Zeitpunkt, abgelegt sein. Der Timer des Betriebssystems ist mit dem Bezugszeichen 23 bezeichnet.

In einer ersten Vergleichereinheit (Komparator) 24 wird überprüft, ob der aktuelle Timerwert einen aus dem Time-Table 21 ausgelesenen Startzeitpunkt 22 für eine Task bereits erreicht hat. Sobald dies der Fall ist, wird ein Interrupt 25 zum Starten der Task ausgelöst. Außerdem wird der Startzeitpunkt 21 der aktuellen Task aus dem Time-Table 21 in das Statusregister 26 geschrieben. Optional kann über einen zweiten Eingang 27 auch eine Kennung der aktuellen Task, beispielsweise eine Anfangskennung und/oder eine Endkennung, in das Signaturregister 26 geschrieben werden. Zu diesem Zweck kann ein Schaltelement 28 vorgesehen werden, welches den Eingang des Signaturregisters 26 zwischen dem Time-Table 21 und dem zweiten Eingang 27 umschaltet, so dass sowohl der Startzeitpunkt 22 als auch die Kennung der Task in das Signaturregister 26 geschrieben werden können.

In einem Speicherelement 29 ist eine erste Signatur abgelegt, welche off-line vor der Abarbeitung des Steuerprogramms anhand derjenigen Tasks gebildet wurde, die bei der ordnungsgemäßen Abarbeitung des Steuerprogramms abgearbeitet werden sollen. Anhand der in dem Signaturregister 26 abgelegten Werte, jedenfalls anhand der Startzeitpunkte 22 aus dem Time-Table 21, wird eine zweite Signatur gebildet. Während die erste Signatur aussagt, welche Tasks abgearbeitet werden müssen, damit auf ein fehlerfrei arbeitendes Betriebssystem geschlossen werden kann, besagt die zweite Signatur, welche der Tasks im Rahmen der Abarbeitung des Steuerprogramms auch tatsächlich ausgeführt wurden. In einer zweiten Vergleichseinheit (Komparator) 30 werden die beiden Signaturen miteinander verglichen. Das Ergebnis 31 des Vergleichs erlaubt eine Aussage darüber, ob die Tasks zum einen in der richtigen Reihenfolge und zum anderen zum richtigen Zeitpunkt abgearbeitet wurden und ob das Betriebssystem des Rechengerätes ordnungsgemäß funktioniert.

Das Signaturregister 26 kann eine Menge von Eingangssignalen (sogenannten Inputs), welche in dem Ausführungsbeispiel als Startzeitpunkte 22 ausgebildet sind, empfangen und über diese nach einem beliebigen Algorithmus eine irgendwie geartete Prüfsumme (die Signatur) bilden. Der Beginn des Empfangs der Eingangssignale durch das Signaturregister 26 kann regelmäßig, zum Beispiel periodisch durch ein Betriebssystemzyklus, getriggert werden. Die Prüfsumme (Signatur) wird auf Anforderung hin mit einem zuvor berechneten Prüfsummenwert 29 verglichen. Falls der Vergleich negativ ausfällt, wird ein Fehlersignal ausgelöst.

Die verwendete Signatur sollte die Eigenschaft haben, dass ein fehlerhafter Eingangssignalvektor (Input Vector) mit großer Wahrscheinlichkeit ein von dem zuvor berechneten Prüfsummenwert 29 abweichendes Ergebnis erzeugt. So kann beispielsweise das sogenannte CRC-Verfahren eingesetzt werden. Alternativ kann auch der gesamte off-line ermittelte Eingangssignalvektor aus dem Speicherelement 29 mit dem während der Abarbeitung des Steuerprogramms aktuell berechneten Eingangssignalvektor verglichen werden.

Eine wesentliche Idee der vorliegenden Erfindung besteht darin, dass Zeitwerte, die zum Auslösen der Zeitsteuerungsaktivitäten des Betriebssystems führen, als Eingangssignale für das Signaturregister 26 verwendet und zur Signaturbildung herangezogen werden. Eine mögliche Ausweitung des Verfahrens besteht darin, dass man nicht die Zeitwert selbst, sondern Funktionen dieser Zeitwerte, das heißt aus den Zeitwerten berechnete Größen, verwendet. Das können insbesondere Differenzen zwischen Zeitwerten sein (bei einem freilaufenden Timer sind die off-line vorliegenden Planeigenschaften nur als zeitliche Differenzen bekannt). Die Funktionen können aber auch hardware-/softwarespezifische Eigenschaften der Implementierung benutzen. Mögliche Beispiele sind zum einen, dass die Hardware nur gestattet, signifikante Bits weiterzuleiten. Ein weiteres Beispiel besteht darin, dass die Vergleichseinheit 30 nicht auf "=", sondern auf "≥" eingestellt ist. Dann ist es eventuell vorteilhaft, den Wert selbst, mit dem verglichen wird, weiterzuleiten und nicht den Timerwert.

Eine zusätzliche Erweiterungsmöglichkeit der Erfindung ergibt sich dadurch, dass nicht nur der Startzeitpunkt der zeitgesteuerten Aktivität in das Signaturregister 26 geschrieben wird, sondern auch eine Kennung der Aktivität. Das kann zum Beispiel der erste Befehl oder die erste Adresse einer Task sein. Ist in dem System zusätzlich bekannt, in welcher Reihenfolge die einzelnen Tasks enden, kann außerdem ein Schreibbefehl auf das Signaturregister 26 ganz am Ende der Task eingeführt werden. Nun kann zusätzlich sichergestellt werden, dass jede Task beendet wurde und dass die Tasks vollständig ausgeführt wurden.

Noch eine Erweiterungsmöglichkeit ist dadurch gegeben, dass in die Bildung der Signaturen 8, 9 ein codiertes Zeitfenster der Abarbeitung der zu überwachenden Tasks einfließt. Dazu wird in das Signaturregister 26 die Nummer des Zeitfensters der zeitgesteuerten Aktivität geschrieben. Die Codierung des Zeitfensters kann mit einer fortlaufenden Zahl oder mit einem geeigneten Code (z.B. Primzahlen) erfolgen. Der Aufruf der zu überwachenden Aktivität ist dann nicht mehr an einen exakten Zeitpunkt gebunden, sondern kann in einem Zeitfenster stattfinden.

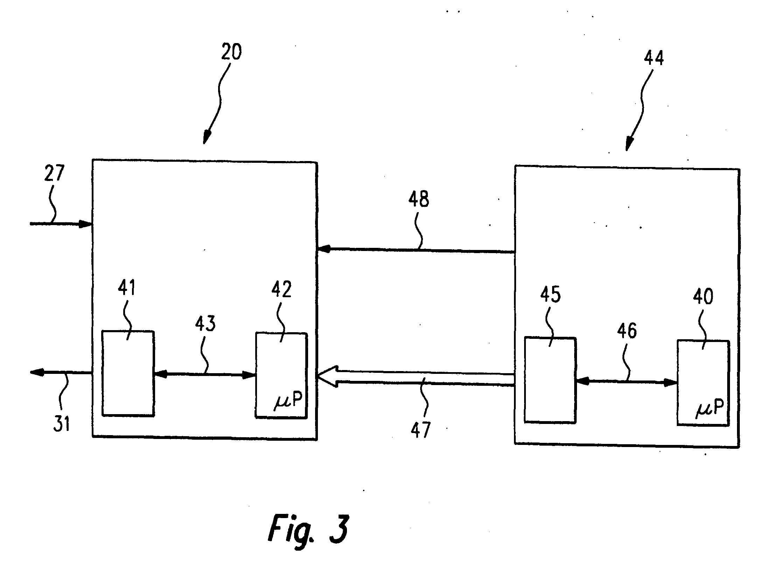

In Figur 3 ist noch einmal die erfindungsgemäße Vorrichtung 20, jedoch in einer anderen Ansicht als in Figur 2, dargestellt. Ein Speicherelement der Vorrichtung 20 ist mit dem Bezugszeichen 41 bezeichnet. Auf dem Speicherelement 41 ist ein erfindungsgemäßes Computerprogramm abgespeichert, das zum Zwecke der Abarbeitung entweder als Ganzes oder abschnittsweise an ein Rechengerät 42, das vorzugsweise als ein Mikroprozessor ausgebildet ist, übertragen wird. Zur Datenübertragung zwischen Speicherelement 41 und Rechengerät 42 ist eine Datenleitung oder ein Bussystem 43 vorgesehen. Das Computerprogramm ist zur Ausführung des erfindungsgemäßen Verfahrens programmiert, wenn es auf dem Rechengerät 42 abläuft.

Es ist eine Vorrichtung 44 vorgesehen, auf deren Rechengerät 40, das insbesondere als ein Mikroprozessor ausgebildet ist, das Steuerprogramm abläuft. Das Steuerprogramm ist auf einem Speicherelement 45 abgelegt und wird zur Abarbeitung über eine Datenübertragungsverbindung 46 an das Rechengerät übermittelt.

Über eine weitere Datenübertragungsverbindung 47 zwischen den beiden Vorrichtungen 20, 44 werden Werte des Timers 23 und Startzeitpunkte 22 aus dem Time-Table 21 an die erfindungsgemäße Vorrichtung 20 übertragen. Die Verbindung 47 kann als eine oder mehrere Datenleitungen oder als Bussystem ausgebildet sein. Des Weiteren ist noch eine Triggerleitung 48 vorgesehen, über die ein Triggersignal an die Vorrichtung 20 zum Auslösen bestimmter Schritte des erfindungsgemäßen Verfahrens abgegeben werden kann. Diese Schritte können sein: Start des erfindungsgemäßen Verfahrens, Scheiben in das Signaturregister oder Start der on-line Signaturbildung.

## Patentansprüche

1. Verfahren zum Steuern von technischen Vorgängen insbesondere in einem Kraftfahrzeug, bei dem ein Steuerprogramm von einem Rechengerät (40), insbesondere von einem Mikroprozessor oder einem Zustandsautomaten, abgearbeitet wird, im Vorfeld der Abarbeitung zumindest über einen zu überwachenden Teil des Programmcodes des Steuerprogramms eine erste Signatur gebildet wird (10), und während der Abarbeitung des Steuerprogramms über den zu überwachenden Teil des abgearbeiteten Programmcodes eine gleichartige zweite Signatur gebildet (9) und mit der ersten Signatur (11) verglichen wird, **dadurch gekennzeichnet, dass** in die Bildung (9, 10) der Signaturen Informationen über den Zeitpunkt der Abarbeitung des zu überwachenden Teils des Steuerprogramms einfließen.

2. Verfahren nach Anspruch 1, **dadurch gekennzeichnet, dass** in die Bildung (9, 10) der Signaturen der Zeitpunkt selbst der Abarbeitung des zu überwachenden Teils des Steuerprogramms einfließt.

3. Verfahren nach Anspruch 1, **dadurch gekennzeichnet, dass** in die Bildung (9, 10) der Signaturen eine von dem Zeitpunkt der Abarbeitung des zu überwachenden Teils des Steuerprogramms abhängige Größe einfließt.

4. Verfahren nach Anspruch 1, **dadurch gekennzeichnet, dass** in die Bildung (9, 10) der Signaturen ein codiertes Zeitfenster der Abarbeitung des zu überwachenden Teils des Steuerprogramms einfließt.

5. Verfahren nach einem der Ansprüche 1 bis 4, **dadurch gekennzeichnet, dass** als zu überwachender Teil des Steuerprogramms mindestens eine Task des Steuerprogramms überwacht wird.

6. Verfahren nach einem der Ansprüche 1 bis 5, **dadurch gekennzeichnet, dass** als Information über den Zeitpunkt der Abarbeitung des zu überwachenden Teils des Steuerprogramms der Beginn der Abarbeitung des zu überwachenden Teils des Steuerprogramms in die Bildung (9, 10) der Signaturen mit einfließt.

7. Verfahren nach einem der Ansprüche 1 bis 6, **dadurch gekennzeichnet, dass** die Signaturen nur über zeitgesteuerte Teile des Steuerprogramms gebildet werden.

8. Verfahren nach einem der Ansprüche 1 bis 7, **dadurch gekennzeichnet, dass** zur Bildung der Signaturen ein Cyclic Redundancy Check (CRC) verwendet wird.

9. Verfahren nach einem der Ansprüche 1 bis 8, **dadurch gekennzeichnet, dass** auf einen Fehler eines Betriebssystems des Rechengeräts (40) geschlossen wird, falls eine Abweichung zwischen der ersten Signatur und der zweiten Signatur festgestellt wird.

10. Verfahren nach Anspruch 9, **dadurch gekennzeichnet, dass** auf einen Fehler eines deterministischen Teils des Betriebssystems geschlossen wird, falls eine Abweichung zwischen der ersten Signatur und der zweiten Signatur festgestellt wird.

11. Vorrichtung (20) zum Überwachen des Ablaufs eines Steuerprogramms auf einem Rechengerät (40), insbesondere auf einem Mikroprozessor oder einem Zustandsautomaten, wobei die Vorrichtung (20) erste Mittel zum Zugreifen auf eine im Vorfeld einer Abarbeitung des Steuerprogramms zumindest über einen zu überwachenden Teil des Programmcodes des Steuerprogramms gebildete erste Signatur (29), zweite Mittel (26) zum Empfangen zumindest des zu überwachenden Teils des abgearbeiteten Programmcodes des Steuerprogramms, und dritte Mittel (26) zum Bilden einer gleichartigen zweiten Signatur über den empfangenen Programmcode aufweist, **dadurch gekennzeichnet, dass** die dritten Mittel (26) der Vorrichtung (20) die zweite Signatur derart bilden, dass in die Bildung der zweiten Signatur Informationen über den Zeitpunkt der Abarbeitung des zu überwachenden Teils des Steuerprogramms einfließen.

12. Vorrichtung (20) nach Anspruch 11, **dadurch gekennzeichnet, dass** die Vorrichtung (20) vierte Mittel (30) zum Vergleichen der zweiten Signatur mit der ersten Signatur aufweist.

13. Vorrichtung (20) nach Anspruch 11 oder 12, **dadurch gekennzeichnet, dass** die Vorrichtung (20) über ein auf dem Rechengerät (40) ablaufendes Betriebssystem getriggert ist.

14. Vorrichtung (20) nach Anspruch 13, **dadurch gekennzeichnet, dass** die Vorrichtung (20) periodisch getriggert ist.

15. Computerprogramm, das auf einem ersten Rechengerät (42), insbesondere auf einem Mikroprozessor, einer Vorrichtung (20) zum Überwachen des Ablaufs eines Steuerprogramms auf einem zweiten Rechengerät (40), insbesondere auf einem Mikroprozessor oder einem Zustandsautomaten, ablauffähig ist, **dadurch gekennzeichnet, dass** das Computerprogramm zur Ausführung eines Verfahrens nach einem der Ansprüche 1 bis 10 programmiert ist, wenn es auf dem ersten Rechengerät (42) abläuft.

## Claims

1. Method for controlling technical processes, in particular in a motor vehicle, in which a control program is executed by a computation unit (40), in particular by a microprocessor or a state machine, a first signature is formed (10), prior to execution, at least over a part of the program code of the control program which needs to be monitored, and, during the execution of the control program, a second signature of the same type is formed (9) over that part of the executed program code which needs to be monitored and is compared with the first signature (11), **characterized in that** information relating to the time of execution of that part of the control program which needs to be monitored is included in the formation (9, 10) of the signatures.

2. Method according to Claim 1, **characterized in that** the time itself of execution of that part of the control program which needs to be monitored is included in the formation (9, 10) of the signatures.

3. Method according to Claim 1, **characterized in that** a variable which depends on the time of execution of that part of the control program which needs to be monitored is included in the formation (9, 10) of the signatures.

4. Method according to Claim 1, **characterized in that** a coded time slot of the execution of that part of the control program which needs to be monitored is included in the formation (9, 10) of the signatures.

5. Method according to one of Claims 1 to 4, **characterized in that** at least one task of the control program is monitored as that part of the control program which needs to be monitored.

6. Method according to one of Claims 1 to 5, **characterized in that** the start of execution of that part of the control program which needs to be monitored is concomitantly included in the formation (9, 10) of the signatures as information relating to the time of execution of that part of the control program which needs to be monitored.

7. Method according to one of Claims 1 to 6, **characterized in that** the signatures are formed only over time-controlled parts of the control program.

8. Method according to one of Claims 1 to 7, **characterized in that** a cyclic redundancy check (CRC) is used to form the signatures.

9. Method according to one of Claims 1 to 8, **characterized in that** a fault in an operating system of the computation unit (40) is inferred if a difference between the first signature and the second signature is determined.

10. Method according to Claim 9, **characterized in that** a fault in a deterministic part of the operating system is inferred if a difference between the first signature and the second signature is determined.

11. Device (20) for monitoring the running of a control program on a computation unit (40), in particular on a microprocessor or a state machine, the device (20) having first means for accessing a first signature (29) formed, prior to execution of the control program, at least over a part of the program code of the control program which needs to be monitored, second means (26) for receiving at least that part of the executed program code of the control program which needs to be monitored, and third means (26) for forming a second signature of the same type over the received program code, **characterized in that** the third means (26) of the device (20) form the second signature in such a manner that information relating to the time of execution of that part of the control program which needs to be monitored is included in the formation of the second signature.

12. Device (20) according to Claim 11, **characterized in that** the device (20) has fourth means (30) for comparing the second signature with the first signature.

13. Device (20) according to Claim 11 or 12, **characterized in that** the device (20) is triggered via an operating system running on the computation unit (40).

14. Device (20) according to Claim 13, **characterized in that** the device (20) is triggered periodically.

15. Computer program which can run on a first computation unit (42), in particular on a microprocessor, of a device (20) for monitoring the running of a control program on a second computation unit (40), in particular on a microprocessor or a state machine, **characterized in that** the computer program is programmed to carry out a method according to one of Claims 1 to 10 when said program runs on the first computation unit (42).

## Revendications

1. Procédé de commande d'opérations techniques, en particulier dans un véhicule automobile, dans lequel
un programme de commande est exécuté par un appareil de calcul (40), en particulier par un microprocesseur ou un automate d'état,
une première signature est formée (10) à l'avant-plan du traitement au moins sur une partie à surveiller du code du programme de commande et pendant le traitement du programme de commande, une deuxième signature similaire est formée (9) sur la partie à surveiller du code de programme exécuté et est comparée à la première signature (11),
**caractérisé en ce que**
des informations concernant l'instant de l'exécution de la partie à surveiller du programme de commande interviennent dans la formation (9, 10) des signatures.

2. Procédé selon la revendication 1, **caractérisé en ce que** l'instant proprement dit de l'exécution de la partie à surveiller du programme de commande intervient dans la formation (9, 10) des signatures.

3. Procédé selon la revendication 1, **caractérisé en ce qu'**une grandeur qui dépend de l'instant de l'exécution de la partie à surveiller du programme de commande intervient dans la formation (9, 10) des signatures.

4. Procédé selon la revendication 1, **caractérisé en ce qu'**une fenêtre temporelle codée de l'exécution de la partie à surveiller du programme de commande intervient dans la formation (9, 10) des signatures.

5. Procédé selon l'une des revendications 1 à 4, **caractérisé en ce qu'**au moins une tâche du programme de commande est surveillée en tant que partie à surveiller du programme de commande.

6. Procédé selon l'une des revendications 1 à 5, **caractérisé en ce que** le début de l'exécution de la partie à surveiller du programme de commande intervient comme information concernant l'instant de l'exécution de la partie à surveiller du programme de commande dans la formation (9, 10) des signatures.

7. Procédé selon l'une des revendications 1 à 6, **caractérisé en ce que** les signatures ne sont formées que sur les parties du programme de commande commandées temporellement.

8. Procédé selon l'une des revendications 1 à 7, **caractérisé en ce qu'**une vérification cyclique de redondance ("cyclic redundancy check" - CRC) est utilisée pour former les signatures.

9. Procédé selon l'une des revendications 1 à 8, **caractérisé en ce qu'**on conclut qu'une erreur est intervenue dans un système d'exploitation de l'appareil de calcul (40) au cas où on constate une différence entre la première signature et la deuxième signature.

10. Procédé selon la revendication 9, **caractérisé en ce qu'**on conclut qu'une erreur est intervenue dans une partie déterministe du système d'exploitation au cas où on constate une différence entre la première signature et la deuxième signature.

11. Dispositif (20) de surveillance du déroulement d'un programme de commande sur un appareil de calcul (40), en particulier sur un microprocesseur ou un automate d'état, le dispositif (20) présentant des premiers moyens d'accès à une première signature (29) formée à l'avant-plan de l'exécution du programme de commande au moins sur une partie à surveiller du code du programme de commande, des deuxièmes moyens (26) qui reçoivent au moins la partie à surveiller du code exécuté du programme de commande et des troisièmes moyens (26) qui forment une deuxième signature similaire sur le code de programme reçu,
**caractérisé en ce que**
les troisièmes moyens (26) du dispositif (20) forment la deuxième signature en faisant intervenir dans la formation de la deuxième signature des informations concernant l'instant de l'exécution de la partie à surveiller du programme de commande.

12. Dispositif (20) selon la revendication 11, **caractérisé en ce que** le dispositif (20) présente des quatrièmes moyens (30) qui comparent la deuxième signature à la première signature.

13. Dispositif (20) selon la revendication 11 ou 12, **caractérisé en ce que** le dispositif (20) est activé par un système d'exploitation qui est exécuté sur l'appareil de calcul (40).

14. Dispositif (20) selon la revendication 13, **caractérisé en ce que** le dispositif (20) est activé périodiquement.

15. Programme informatique apte à être exécuté sur un premier appareil de calcul (42), en particulier sur un microprocesseur, un dispositif (20) de surveillance du déroulement d'un programme de commande sur un deuxième appareil de calcul (40), en particulier sur un microprocesseur ou un automate d'état,
**caractérisé en ce que**
le programme informatique est programmé pour exécuter un procédé selon l'une des revendications 1 à 10 lorsqu'il est exécuté sur le premier appareil de calcul (42).
